# EUROPEAN PATENT APPLICATION

(11) **EP 4 432 415 A1**
(43) Date of publication of application: **18.09.2024**
(21) Application number: 23796761.7
(22) Date of filing: 25.04.2023
(51) Int. Cl.: H01M 10/0567, H01M 10/42, H01M 10/058, H01M 10/052, H01M 10/0568

(54) **NON-AQUEOUS ELECTROLYTE, LITHIUM SECONDARY BATTERY INCLUDING SAME, AND METHOD FOR MANUFACTURING LITHIUM SECONDARY BATTERY**

(30) Priority: 25.04.2022 KR 20220051005
(71) Applicant: LG Energy Solution, Ltd., Seoul 07335 (KR)
(72) Inventor: SHIN, Won Kyung, Daejeon 34122 (KR); LEE, Chul Haeng, Daejeon 34122 (KR); AHN, Kyoung Ho, Daejeon 34122 (KR); LEE, Won Tae, Daejeon 34122 (KR); OH, Young Ho, Daejeon 34122 (KR)
(74) Representative: Hoffmann Eitle
(86) International application number: PCT/KR2023/005615
(87) International publication number: WO 2023/211116

(57) **Abstract**

The present invention relates to a non-aqueous electrolyte solution composition which is composed of an organic solvent, a lithium salt, a cyclic carbonate-based additive containing a carbon-carbon double bond, and an azo-based initiator,
wherein the azo-based initiator is represented by Formula 1, and
the cyclic carbonate-based additive is included in an amount of 0.01 wt% to 5 wt% based on the total non-aqueous electrolyte solution composition.

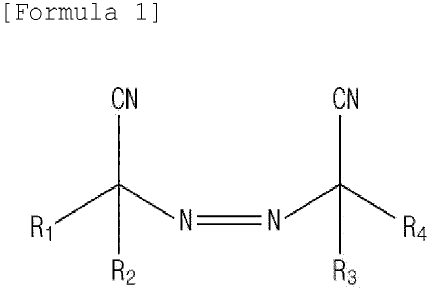

In Formula 1, R₁ to R₄ are each independently selected from an alkyl group having 1 to 5 carbon atoms or an alkoxy group having 1 to 5 carbon atoms, and a case where all of R₁ to R₄ are methyl groups is excluded.

## Description

### TECHNICAL FIELD

### [Cross-reference to Related Applications]

This application claims priority from Korean Patent Application No. 10-2022-0051005, filed on April 25, 2022, the disclosure of which is incorporated by reference herein.

### [Technical Field]

The present invention relates to a non-aqueous electrolyte solution, a lithium secondary battery including the same, and a method of preparing the lithium secondary battery.

### BACKGROUND ART

Recently, demand for a secondary battery having high stability as well as high capacity and high output is increasing as an application area of lithium secondary batteries is rapidly expanding not only to electricity, electronics, communication, and power supply of electronic devices such as computers, but also to power storage and supply of automobiles or large-area devices such as power storage devices.

Particularly, high capacity, high output, and long-term life characteristics are becoming important in lithium secondary batteries for automotive applications. In order to increase capacity of the secondary battery, a nickel-rich positive electrode active material having high energy density but low stability may be used, or the secondary battery may be operated at a high voltage.

However, in a case in which the secondary battery is operated under the above conditions, transition metal ions may be dissolved from a surface of a positive electrode while an electrode surface structure or a film formed on the surface of the positive/negative electrode is degraded due to a side reaction caused by degradation of an electrolyte as charge and discharge proceed. As described above, since the dissolved transition metal ions degrade passivation ability of a solid electrolyte interphase (SEI) while being electro-deposited on the negative electrode, there occurs a problem in that the negative electrode is degraded.

This degradation phenomenon of the secondary battery tends to be accelerated when a potential of the positive electrode is increased or when the battery is exposed to a high temperature.

Thus, in order to solve this problem, research and development on a method, which may improve electrochemical properties at high temperature by inhibiting the dissolution of the metal ions from the positive electrode and forming a stable SEI film on the negative electrode, are being attempted.

### DISCLOSURE OF THE INVENTION

### TECHNICAL PROBLEM

An aspect of the present invention provides a non-aqueous electrolyte solution composition which may suppress degradation of a positive electrode, may reduce a side reaction between the positive electrode and an electrolyte, and may form a stable solid electrolyte interphase (SEI) film on a negative electrode.

Another aspect of the present invention provides a lithium secondary battery, in which electrochemical properties at high temperature are improved by including the above non-aqueous electrolyte solution composition, and a method of preparing the same.

### TECHNICAL SOLUTION

In order to achieve the above object, the present invention provides a non-aqueous electrolyte solution composition which is composed of an organic solvent, a lithium salt, a cyclic carbonate-based additive containing a carbon-carbon double bond, and an azo-based initiator, wherein the azo-based initiator is represented by Formula 1, and the cyclic carbonate-based additive is included in an amount of 0.01 wt% to 5 wt% based on the total non-aqueous electrolyte solution composition. 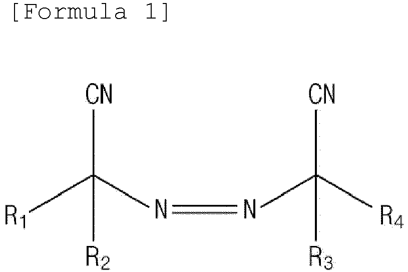 wherein, in Formula 1, R₁ to R₄ are each independently selected from an alkyl group having 1 to 5 carbon atoms or an alkoxy group having 1 to 5 carbon atoms, and a case where all of R₁ to R₄ are methyl groups is excluded.

According to another embodiment, the present invention provides a lithium secondary battery which is prepared by injecting the non-aqueous electrolyte solution composition into a case accommodating an electrode assembly that includes a positive electrode; a negative electrode; and a separator disposed between the positive electrode and the negative electrode.

According to another embodiment, the present invention provides a method of preparing a lithium secondary battery which includes the steps of: preparing a lithium secondary battery into which a non-aqueous electrolyte solution composition, which includes an organic solvent, a lithium salt, a cyclic carbonate-based additive containing a carbon-carbon double bond, and an azo-based initiator, is injected; and activating the lithium secondary battery to form a cyclic carbonate polymer film on a surface of an electrode, wherein the azo-based initiator is represented by Formula 1, and the cyclic carbonate-based additive containing a carbon-carbon double bond is included in an amount of 0.01 wt% to 5 wt% based on the total non-aqueous electrolyte solution composition. 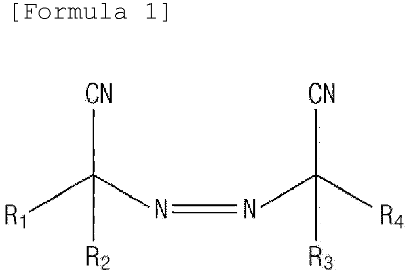 wherein, in Formula 1, R₁ to R₄ are each independently selected from an alkyl group having 1 to 5 carbon atoms or an alkoxy group having 1 to 5 carbon atoms, and a case where all of R₁ to R₄ are methyl groups is excluded.

### ADVANTAGEOUS EFFECTS

In general, it is known that a cyclic carbonate-based additive containing a carbon-carbon double bond mainly causes a ring-opening reaction in an electrolyte solution of a lithium secondary battery.

In contrast, a non-aqueous electrolyte solution composition of the present invention allows a polymerization reaction of a carbon-carbon double bond to mainly occur rather than the ring-opening reaction in the cyclic carbonate-based additive containing a carbon-carbon double bond by including an azo-based initiator together with the cyclic carbonate-based additive containing a carbon-carbon double bond. Since a cyclic carbonate polymer film formed by the polymerization reaction of the carbon-carbon double bond is more durable than a film formed by the ring-opening reaction of the cyclic carbonate-based additive, an elastic and robust SEI (Solid Electrolyte Interphase) film may be formed on a surface of a negative electrode.

Thus, the electrolyte solution composition of the present invention may prevent degradation of the negative electrode by suppressing degradation of passivation ability of the SEI at high temperature. Also, since a lithium secondary battery including a non-aqueous electrolyte solution according to the present invention may form an electrode-electrolyte interface which has low resistance and is stable even at high temperatures, the lithium secondary battery having improved overall performance at high temperatures may be achieved.

### MODE FOR CARRYING OUT THE INVENTION

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

Also, the expressions "a" and "b" in the description of "a to b carbon atoms" in the present specification each denote the number of carbon atoms included in a specific functional group. That is, the functional group may include "a" to "b" carbon atoms. For example, the expression "alkylene group having 1 to 5 carbon atoms" denotes an alkylene group including 1 to 5 carbon atoms, that is, -CH₂-, -CH₂CH₂-, - CH₂CH₂CH₂-, -CH₂(CH₃)CH-, -CH(CH₃)CH₂-, and-CH(CH₃)CH₂CH₂-. Furthermore, in the present specification, the expression "alkylene group" denotes a branched or unbranched divalent unsaturated hydrocarbon group.

Also, an alkyl group or alkylene group in the present specification may all be substituted or unsubstituted. Unless otherwise defined, the expression "substitution" denotes that at least one hydrogen bonded to carbon is substituted with an element other than hydrogen, for example, an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a heterocycloalkyl group having 3 to 12 carbon atoms, a heterocycloalkenyl group having 3 to 12 carbon atoms, an aryloxy group having 6 to 12 carbon atoms, a halogen atom, a fluoroalkyl group having 1 to 20 carbon atoms, a nitro group, an aryl group having 6 to 20 carbon atoms, a heteroaryl group having 2 to 20 carbon atoms, or a haloaryl group having 6 to 20 carbon atoms.

Hereinafter, the present invention will be described in more detail.

### Non-aqueous Electrolyte Solution Composition

Anon-aqueous electrolyte solution composition according to the present invention is characterized in that it is composed of an organic solvent, a lithium salt, a cyclic carbonate-based additive containing a carbon-carbon double bond, and an azo-based initiator.

The organic solvent included in the non-aqueous electrolyte solution composition according to the present invention may include at least one organic solvent selected from the group consisting of a cyclic carbonate-based organic solvent and a linear carbonate-based organic solvent.

The cyclic carbonate-based organic solvent is an organic solvent which may well dissociate the lithium salt in an electrolyte due to high permittivity as a highly viscous organic solvent, wherein specific examples of the cyclic carbonate-based organic solvent may be at least one organic solvent selected from the group consisting of ethylene carbonate (EC),propylene carbonate (PC), fluoroethylene carbonate (FEC), 1,2-butylene carbonate, 2,3-butylene carbonate, 1,2-pentylene carbonate, and 2,3-pentylene carbonate.

The linear carbonate-based organic solvent is an organic solvent having low viscosity and low permittivity, wherein typical examples of the linear carbonate-based organic solvent may be at least one organic solvent selected from the group consisting of dimethyl carbonate (DMC), diethyl carbonate (DEC), dipropyl carbonate, ethylmethyl carbonate (EMC), methylpropyl carbonate, and ethylpropyl carbonate.

Specifically, the organic solvent may include at least one organic solvent selected from the group consisting of ethylene carbonate, diethyl carbonate, and ethylmethyl carbonate.

Furthermore, the organic solvent may further include at least one ester-based organic solvent selected from the group consisting of a linear ester-based organic solvent and a cyclic ester-based organic solvent in addition to at least one carbonate-based organic solvents elected from the group consisting of the cyclic carbonate-based organic solvent and the linear carbonate-based organic solvent to prepare an electrolyte having high ionic conductivity.

Specific examples of the linear ester-based organic solvent may be at least one organic solvent selected from the group consisting of methyl acetate, ethyl acetate, propyl acetate, methyl propionate, ethyl propionate, propyl propionate, and butyl propionate.

The cyclic ester-based organic solvent may include at least one organic solvent selected from the group consisting of γ-butyrolactone, γ-valerolactone, γ-caprolactone, σ-valerolactone, and ε-caprolactone.

The organic solvent may be used by adding an organic solvent typically used in a non-aqueous electrolyte solution without limitation, if necessary. For example, the organic solvent may further include at least one organic solvent selected from an ether-based organic solvent, a glyme-based solvent, and a nitrile-based organic solvent.

As the ether-based solvent, any one selected from the group consisting of dimethyl ether, diethyl ether, dipropyl ether, methylethyl ether, methylpropyl ether, ehtylpropyl ether, 1,3-dioxolane (DOL), and 2,2-bis(trifluoromethyl)-1,3-dioxolane (TFDOL) or a mixture of two or more thereof may be used, but the ether-based solvent is not limited thereto.

The glyme-based solvent is a solvent having higher permittivity and lower surface tension than the linear carbonate-based organic solvent as well as less reactivity with metal, wherein the glyme-based solvent may include at least one selected from the group consisting of dimethoxyethane (glyme, DME), diethoxyethane, diglyme, tri-glyme (Triglyme), and tetra-glyme (TEGDME), but is not limited thereto.

The nitrile-based solvent may be at least one selected from the group consisting of acetonitrile, propionitrile, butyronitrile, valeronitrile, caprylontrile, heptanenitrile, cyclopentane carbonitrile, cyclohexane carbonitrile, 2-fluorobenzonitrile, 4-fluorobenzonitrile,difluorobenzonitrile, trifluorobenzonitrile, phenylacetonitrile, 2-fluorophenylacetonitrile, and 4-fluorophenylacetonitrile, but is not limited thereto.

The lithium salt included in the non-aqueous electrolyte solution composition according to the present invention may include at least one selected from the group consisting of LiPF₆, lithium bis(fluorosulfonyl)imide, and lithium bis(trifluoromethanesulfonyl)imide. The lithium salt is used as an electrolyte salt in a lithium secondary battery, wherein it is used as a medium for transferring ions.

The non-aqueous electrolyte solution composition according to the present invention may include an additional lithium salt in addition to the above lithium salt. The additional lithium salt, for example, may typically include Li⁺ as a cation, and may include at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂ (CF₃)₂CO⁻, (CF₃SO₂)₂CH⁻, CF₃(CF₂)₇SO₃⁻, and SCN⁻as an anion.

The lithium salt may be appropriately changed in a normally usable range, but may be included in a concentration of 0.1 M to 4.0 M, preferably 0.8 M to 2.5 M, and more preferably 0.8 M to 2.0 M in the electrolyte to obtain an optimum effect of forming a solid electrolyte interphase (SEI) film. If the concentration of the lithium salt is less than 0.1 M, since an amount of lithium is insufficient, capacity and cycle characteristics of the lithium secondary battery are poor, and, if the concentration of the lithium salt is greater than 4.0 M, there may be a problem in that impregnability of the electrolyte is reduced due to an increase in viscosity of the non-aqueous electrolyte solution, ionic conductivity is decreased, and battery resistance is increased.

The non-aqueous electrolyte solution composition according to the present invention includes a cyclic carbonate-based additive containing a carbon-carbon double bond to form a cyclic carbonate polymer film on a surface of an electrode in a lithium secondary battery. Specifically, the cyclic carbonate-based additive may be at least one selected from the group consisting of vinylene carbonate and vinyl ethylene carbonate.

The cyclic carbonate-based additive containing a carbon-carbon double bond may be included in an amount of 0.01 wt% to 5 wt%, preferably 0.1 wt% to 3 wt%, and more preferably 1 wt% to 3 wt% based on the total non-aqueous electrolyte solution composition. In a case in which the cyclic carbonate-based additive containing a carbon-carbon double bond is included in an amount within the above range, an appropriate amount of the SEI film, by which overall performance at high temperatures of the lithium secondary battery may be optimized, is formed.

The azo-based initiator included in the non-aqueous electrolyte solution composition according to the present invention may be represented by Formula 1 below. The azo-based initiator included in the non-aqueous electrolyte solution composition mainly causes a polymerization reaction of a carbon-carbon double bond rather than a ring-opening reaction in the cyclic carbonate-based additive containing a carbon-carbon double bond. Since the cyclic carbonate polymer film formed by the polymerization reaction of the carbon-carbon double bond is more durable than a film formed by the ring-opening reaction of the cyclic carbonate-based additive, an elastic and robust SEI (Solid Electrolyte Interphase) film may be formed on a surface of a negative electrode. Also, the azo-based initiator of the present invention has an effect capable of causing a sufficient initiation reaction due to a small amount of volatilization before the formation of the cyclic carbonate polymer film, and has an effect of suppressing various side reactions caused by the volatilized initiator.

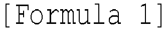

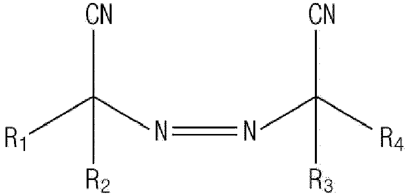

In Formula 1, R₁ to R₄ are each independently selected from an alkyl group having 1 to 5 carbon atoms or an alkoxy group having 1 to 5 carbon atoms, and a case where all of R₁ to R₄ are methyl groups may be excluded. Preferably, in Formula 1, R₁ to R₄ may each independently be an alkyl group having 1 to 5 carbon atoms, and a case where all of R₁ to R₄ are methyl groups may be excluded.

Specifically, the azo-based initiator may be a compound represented by Formula 1-1 or Formula 1-2 below.

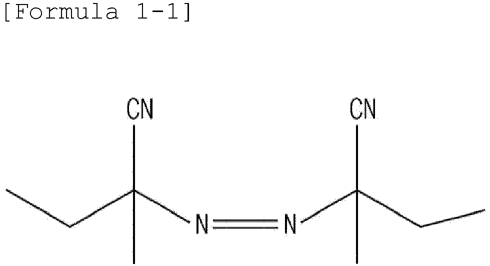

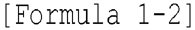

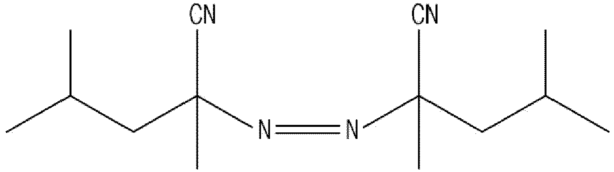

The azo-based initiator may be included in an amount of 0.001 wt% to 0.3 wt%, preferably 0.010 wt% to 0.25 wt%, and more preferably 0.10 wt% to 0.25 wt% based on the total non-aqueous electrolyte solution composition. In a case in which the azo-based initiator is included in an amount within the above range, the appropriate amount of the SEI film, by which the overall performance at high temperatures of the lithium secondary battery may be optimized, is formed.

The non-aqueous electrolyte solution composition of the present invention may further include a known electrolyte additive in the non-aqueous electrolyte solution, if necessary, in order to prevent the occurrence of collapse of the negative electrode due to decomposition of the non-aqueous electrolyte solution in a high output environment or to further improve low-temperature high rate discharge characteristics, high-temperature stability, overcharge prevention, and an effect of suppressing battery swelling at high temperature.

Typical examples of the other electrolyte additives may include at least one additive for forming a SEI film which is selected from the group consisting of a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound.

The halogen-substituted carbonate-based compound may include fluoroethylene carbonate (FEC).

The sultone-based compound may include at least one compound selected from the group consisting of 1,3-propane sultone (PS),1,4-butane sultone, ethane sultone, 1,3-propene sultone (PRS), 1,4-butene sultone, and 1-methyl-1,3-propenesultone.

The sulfate-based compound may include ethylene sulfate (Esa), trimethylene sulfate (TMS), or methyl trimethylene sulfate (MTMS).

The phosphate-based compound may include at least one compound selected from the group consisting of lithium difluoro(bisoxalato)phosphate, lithium difluorophosphate, tetramethyl trimethyl silyl phosphate, trimethyl silyl phosphite, tris(2,2,2-trifluoroethyl)phosphate, and tris(trifluoroethyl)phosphite.

The borate-based compound may include tetraphenylborate, lithium oxalyldifluoroborate (LiODFB), and lithium bis (oxalato) borate (LiB(C₂O₄)₂, LiBOB) .

The nitrile-based compound may include at least one compound selected from the group consisting of succinonitrile, adiponitrile, acetonitrile, propionitrile, butyronitrile, valeronitrile, caprylonitrile, heptanenitrile, cyclopentanecarbonitrile, cyclohexanecarbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may include fluorobenzene, the amine-based compound may include triethanolamine or ethylenediamine, and the silane-based compound may include tetravinylsilane.

The lithium salt-based compound is a compound different from the lithium salt included in the non-aqueous electrolyte solution, wherein the lithium salt-based compound may include lithium difluorophosphate (LiDFP), LiPO₂F₂, orLiBF₄.

In a case in which, among these other electrolyte additives, a combination of 1,3-propane sultone (PS), ethylene sulfate (Esa), and lithium difluorophosphate (LiDFP) is additionally included, a more robust SEI film may be formed on the surface of the negative electrode during an initial activation process of the secondary battery, and high-temperature stability of the secondary battery may be improved by suppressing generation of a gas which may be generated due to the decomposition of the electrolyte at high temperature.

Two or more other electrolyte additives may be mixed and used, and the additives may be included in an amount of 0.01 wt% to 20 wt%, particularly 0.01 wt% to 10 wt%, and preferably 0.05 wt% to 5 wt% based on a total weight of the non-aqueous electrolyte solution. If the amount of the other electrolyte additives is less than 0.01 wt%, effects of improving high-temperature storage characteristics and high-temperature life characteristics of the battery are insignificant, and, if the amount of the other electrolyte additives is greater than 20 wt%, there is a possibility that a side reaction in the electrolyte occurs excessively during charge and discharge of the battery. Particularly, since the other electrolyte additives may not be sufficiently decomposed at high temperatures when an excessive amount of the other electrolyte additives is added, the other electrolyte additives may be present in the form of an unreacted material or precipitates in the electrolyte at room temperature. Accordingly, a side reaction may occur in which life or resistance characteristics of the secondary battery are degraded.

### Lithium Secondary Battery

The present invention provides a lithium secondary battery including the non-aqueous electrolyte solution composition.

Specifically, the lithium secondary battery includes a positive electrode including a positive electrode active material, a negative electrode including a negative electrode active material, a separator disposed between the positive electrode and the negative electrode, and the above-described non-aqueous electrolyte solution composition.

In this case, the lithium secondary battery of the present invention may be prepared according to a typical method known in the art. For example, after an electrode assembly is formed by sequentially stacking a positive electrode, a negative electrode, and a separator between the positive electrode and the negative electrode, the electrode assembly is inserted into a battery case, and the lithium secondary battery may be prepared by injecting the non-aqueous electrolyte solution composition according to the present invention.

Hereinafter, components other than the non-aqueous electrolyte solution composition will be described in more detail.

### (1) Positive Electrode

The positive electrode may be prepared by coating a positive electrode collector with a positive electrode material mixture slurry including a positive electrode active material, a binder, a conductive agent, and a solvent.

The positive electrode collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

The positive electrode active material is a compound capable of reversibly intercalating and deintercalating lithium, wherein the positive electrode active material may specifically include a lithium metal oxide including lithium and at least one metal such as cobalt, manganese, nickel, or aluminum. More specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-y}Mn_{y}O₂ (where 0<Y<1), LiMn_{2-Z}Ni_{Z}O₄ (where 0<Z<2), etc.), lithium-nickel-cobalt-based oxide (e.g., LiNi_{1-Y1}Co_{Y1}O₂ (where 0<Y1<1), etc.), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), etc.), lithium-nickel-manganese-cobalt-based oxide (e.g., Li(NiₚCo_{q}Mnᵣ)O₂ (where 0<p<1, 0<q<1, 0<r<1, and p+q+r=1) or Li(Niₚ₁Co_{q1}Mnᵣ₁)O₄ (where 0<p1<2, 0<q1<2, 0<r1<2, and p1+q1+r1=2), etc.), or lithium-nickel-cobalt-transition metal (M) oxide (e.g., Li(Niₚ₂Co_{q2}Mnᵣ₂Mₛ₂)O₂ (where M is selected from the group consisting of aluminum (Al), iron (Fe), vanadium (V), chromium (Cr), titanium (Ti), tantalum (Ta), magnesium (Mg), and molybdenum (Mo), and p2, q2, r2, and S2 are atomic fractions of each independent elements, wherein 0<p2<1, 0<q2<1, 0<r2<1, 0<S2<1, and p2+q2+r2+S2=1), etc.), and any one thereof or a compound of two or more thereof may be included.

Among these materials, in terms of the improvement of capacity characteristics and stability of the battery, the lithium metal oxide may be LiCoO₂, LiMnO₂, LiNiO₂, lithium nickel manganese cobalt oxide (e.g., Li (Ni_{1/3}Mn_{1/3}Co_{1/3})O₂, Li (Ni_{0.6}Mn_{0.2}Co_{0.2})O₂, Li(Ni_{0.6}Mn_{0.3}Co_{0.2})O₂, Li(Ni_{0.7}Mn_{0.15}Co_{0.15})O₂,and Li(Ni_{0.8}Mn_{0.1}Co_{0.1})O₂, etc.),or lithium nickel cobalt aluminum oxide (e.g., LiNi_{0.8}Co_{0.15}Al_{0.05}O₂, etc.), and, in consideration of a significant improvement effect due to the control of types and content ratios of components constituting the lithium composite metal oxide, the lithium composite metal oxide may be Li (Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂, and any one thereof or a mixture of two or more thereof may be used.

The positive electrode active material may be included in an amount of 60 wt% to 99 wt%, preferably 70 wt% to 99 wt%, and more preferably 80 wt% to 98 wt% based on a total weight of solid content in the positive electrode material mixture slurry.

The binder is a component that assists in the binding between the active material and the conductive agent and in the binding with the current collector.

Examples of the binder may be polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene (PE), polypropylene, ethylene-propylene-diene, sulfonated ethylene-propylene-diene, a styrene-butadiene rubber, a fluoro rubber, or various copolymers.

The binder may commonly be included in an amount of 1 wt% to 20 wt%, preferably 1 wt% to 15 wt%, and more preferably 1 wt% to 10 wt% based on the total weight of the solid content in the positive electrode material mixture slurry.

The conductive agent is a component for further improving conductivity of the positive electrode active material.

The conductive agent is a component for further improving the conductivity of the positive electrode active material, wherein it may be added in an amount of 1 wt% to 20 wt% based on the total weight of the solid content in the positive electrode material mixture slurry. The conductive agent is not particularly limited as long as it has conductivity without causing adverse chemical changes in the battery, and, for example, a conductive material, such as: carbon powder such as carbon black, acetylene black, Ketjen black, channel black, furnace black, lamp black, or thermal black; graphite powder such as natural graphite, artificial graphite, or graphite; conductive fibers such as carbon fibers, carbon nanotubes, or metal fibers; fluorocarbon powder; conductive powder such as aluminum powder and nickel powder; conductive whiskers such as zinc oxide whiskers and potassium titanate whiskers; conductive metal oxide such as titanium oxide; or polyphenylene derivatives, may be used.

The conductive agent may commonly be included in an amount of 1 wt% to 20 wt%, preferably 1 wt% to 15 wt%, and more preferably 1 wt% to 10 wt% based on the total weight of the solid content in the positive electrode material mixture slurry.

The solvent may include an organic solvent, such as N-methyl-2-pyrrolidone (NMP), and may be used in an amount such that desirable viscosity is obtained when the positive electrode active material as well as optionally the binder and the conductive agent is included. For example, the solvent may be included in an amount such that a concentration of the solid content including the positive electrode active material as well as optionally the binder and the conductive agent is in a range of 50 wt% to 95 wt%, preferably 70 wt% to 95 wt%, and more preferably 70 wt% to 90 wt%.

### (2) Negative Electrode

The negative electrode, for example, may be prepared by coating a negative electrode material mixture slurry including a negative electrode active material, a binder, a conductive agent, and a solvent on a negative electrode collector, or a graphite electrode formed of carbon (C) or a metal itself may be used as the negative electrode.

For example, in a case in which the negative electrode is prepared by coating the negative electrode material mixture slurry on the negative electrode collector, the negative electrode collector generally has a thickness of 3 um to 500 um. The negative electrode collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

Also, the negative electrode active material may include at least one selected from the group consisting of lithium metal, a carbon material capable of reversibly intercalating/deintercalating lithium ions, metal or an alloy of lithium and the metal, a metal composite oxide, a material which may be doped and undoped with lithium, and a transition metal oxide.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes.

As the metal or the alloy of lithium and the metal, a metal selected from the group consisting of copper (Cu), nickel (Ni), sodium (Na), potassium (K), rubidium (Rb), cesium (Cs), francium (Fr), beryllium (Be), Mg, calcium (Ca), strontium (Sr), silicon (Si), antimony (Sb), lead (Pb), indium (In), zinc (Zn), barium (Ba), radium (Ra), germanium (Ge), Al, and tin (Sn) or an alloy of lithium and the metal may be used.

One selected from the group consisting of PbO, PbO₂, Pb₂O₃, Pb₃O₄, Sb₂O₃, Sb₂O₄, Sb₂O₃, GeO, GeO₂, Bi₂O₃, Bi₂O₄, Bi₂O₃, LiₓFe₂O₃ (0≤x≤1), LiₓWO₂ (0≤x≤1), and SnₓMe₁₋ₓMe'_{y}O_{z} (Me: manganese (Mn), Fe, Pb, or germanium (Ge); Me': Al, boron (B), phosphorus (P), Si, Groups I, II and III elements of the periodic table, or halogen; 0<x≤1; 1≤y≤3; 1≤z≤8) may be used as the metal composite oxide.

The material, which may be doped and undoped with lithium, may include Si, SiOₓ (0<x≤2), a Si-Y alloy (where Y is an element selected from the group consisting of alkali metal, alkaline earth metal, a Group 13 element, a Group 14 element, transition metal, a rare earth element, and a combination thereof, and is not Si), tin (Sn), SnO₂, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and at least one thereof may also be used. The element Y may be selected from the group consisting of Mg, Ca, Sr, Ba, Ra, scandium (Sc), yttrium (Y), Ti, zirconium (Zr), hafnium (Hf), rutherfordium (Rf), V, niobium (Nb), Ta, dubnium (Db), Cr, Mo, tungsten (W), seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), zinc (Zn), cadmium (Cd), B,Al, gallium (Ga), Sn, In, Ge, P, arsenic (As), Sb, bismuth (Bi), sulfur (S), selenium (Se), tellurium (Te), polonium (Po), and a combination thereof.

The transition metal oxide may include lithium-containing titanium composite oxide (LTO), vanadium oxide, and lithium vanadium oxide.

The additive according to the present invention is particularly effective when Si or SiOₓ (0<x≤2) is used as the negative electrode active material. Specifically, in a case in which a Si-based negative electrode active material is used, degradation of life characteristics is promoted due to extreme volume expansion-shrinkage during cycles if a robust SEI film is not formed on the surface of the negative electrode during initial activation. However, since the additive according to the present invention may form an elastic and robust SEI film, it may improve life characteristics and storage characteristics of a secondary battery using the Si-based negative electrode active material.

The negative electrode active material may be included in an amount of 50 wt% to 99 wt%, preferably 60 wt% to 99 wt%, and more preferably 70 wt% to 98 wt% based on a total weight of solid content in the negative electrode material mixture slurry.

The binder is a component that assists in the binding between the conductive agent, the active material, and the current collector. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, ethylene-propylene-diene, sulfonated ethylene-propylene-diene, a styrene-butadiene rubber, a fluoro rubber, or various copolymers thereof.

The binder may be commonly included in an amount of 1 wt% to 20 wt%, preferably 1 wt% to 15 wt%, and more preferably 1 wt% to 10 wt% based on the total weight of the solid content in the negative electrode material mixture slurry.

The conductive agent is a component for further improving conductivity of the negative electrode active material, wherein the conductive agent may be added in an amount of 1 wt% to 20 wt% based on the total weight of the solid content in the negative electrode material mixture slurry. The conductive agent is not particularly limited as long as it has conductivity without causing adverse chemical changes in the battery, and, for example, a conductive material, such as: carbon powder such as carbon black, acetylene black, Ketjen black, channel black, furnace black, lamp black, or thermal black; graphite powder such as natural graphite, artificial graphite, or graphite; conductive fibers such as carbon nanotubes, carbon fibers, or metal fibers; fluorocarbon powder; conductive powder such as aluminum powder and nickel powder; conductive whiskers such as zinc oxide whiskers and potassium titanate whiskers; conductive metal oxide such as titanium oxide; or polyphenylene derivatives, may be used.

The conductive agent may be included in an amount of 1 wt% to 20 wt%, preferably 1 wt% to 15 wt%, and more preferably 1 wt% to 10 wt% based on the total weight of the solid content in the negative electrode material mixture slurry.

The solvent may include water or an organic solvent, such as NMP (N-methyl-2-pyrrolidone), and may be used in an amount such that desirable viscosity is obtained when the negative electrode active material as well as optionally the binder and the conductive agent is included. For example, the solvent may be included in an amount such that a concentration of the solid content including the negative electrode active material as well as optionally the binder and the conductive agent is in a range of 50 wt% to 95 wt%, preferably, 70 wt% to 90 wt%.

In a case in which the metal itself is used as the negative electrode, the negative electrode may be a metal thin film itself or may be prepared by a method in which the metal is physically bonded, rolled, or deposited on the negative electrode collector. As the deposition method, an electrical deposition method or a chemical vapor deposition method for the metal may be used.

For example, the metal thin film itself or the metal to be bonded/rolled/deposited on the negative electrode collector may include one type of metal selected from the group consisting of lithium (Li), nickel (Ni), tin (Sn), copper (Cu), and indium (In) or an alloy of two types of metals.

### (3) Separator

Also, a conventional porous polymer film typically used as a separator, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith as the separator, and a typical porous nonwoven fabric, for example, a nonwoven fabric formed of high melting point glass fibers or polyethylene terephthalate fibers may be used, but the present invention is not limited thereto. Furthermore, a coated separator including a ceramic component or a polymer material may be used to secure heat resistance or mechanical strength, and the separator having a single layer or multilayer structure may be optionally used.

A shape of the lithium secondary battery of the present invention is not particularly limited, but a cylindrical type using a can, a prismatic type, a pouch type, or a coin type may be used.

### Method of Preparing Secondary Battery

A method of preparing a lithium secondary battery according to the present invention may include the steps of: preparing a lithium secondary battery into which a non-aqueous electrolyte solution composition, which includes an organic solvent, a lithium salt, a cyclic carbonate-based additive containing a carbon-carbon double bond, and an azo-based initiator, is injected; and activating the lithium secondary battery to form a cyclic carbonate polymer film on a surface of an electrode.

The preparing of the lithium secondary battery may be performed according to a typical method known in the art. For example, after an electrode assembly, in which a positive electrode, a negative electrode, and a separator between the positive electrode and the negative electrode are sequentially stacked, is formed, the electrode assembly is inserted into a battery case, and the lithium secondary battery may be prepared by injecting the non-aqueous electrolyte solution composition of the present invention. The non-aqueous electrolyte solution composition of the present invention may be prepared by mixing the above-described organic solvent, lithium salt, cyclic carbonate-based additive containing a carbon-carbon double bond, and azo-based initiator. Since the components of the non-aqueous electrolyte solution composition and electrode assembly have been described above, a description thereof will be omitted, and other steps will be described below.

The non-aqueous electrolyte solution composition of the present invention may form a more robust negative electrode protective film on the surface of the negative electrode by forming the cyclic carbonate polymer film through the polymerization reaction between the carbon-carbon double bonds contained in the cyclic carbonate-based additive during the initial activation process of the lithium secondary battery. The polymerization reaction of the carbon-carbon double bonds occurs prior to the ring-opening reaction in the cyclic carbonate-based additive by being promoted by the azo-based initiator.

The activating of the lithium secondary battery may be performed by including an initial charging process, an aging process, and a discharging process.

Under the initial charging conditions, charging may be performed until remaining capacity (state of charge (SOC)) is in a range of 5% to 85%, preferably 5% to 60%, and most preferably 30% to 50%.

The initial charging may be performed at a temperature of 30°C to 80°C, preferably 40°C to 70°C, and more preferably 45°C to 70°C.

The aging may be performed at a high temperature of 30°C to 80°C, preferably 40°C to 70°C, and more preferably 45°C to 70°C.In a case in which the high-temperature aging is performed, there is an advantage in that the electrode film is stabilized and gas generated in the electrode is well discharged to the outside. However, in the case that the high-temperature aging is performed, there may be a problem in that volatilization of a conventionally used azo-based initiator occurs. In contrast, the azo-based initiator included in the non-aqueous electrolyte solution composition according to the present invention has the effect of causing the sufficient initiation reaction due to the small amount of the volatilization before the formation of the cyclic carbonate polymer film, and has the effect of suppressing the various side reactions caused by the volatilized initiator.

The aging may be performed for 4 hours to 48 hours, preferably 6 hours to 42 hours, and more preferably 8 hours to 36 hours.

Under the discharging conditions, discharging may be performed until remaining capacity (SOC) is in a range of 0% to 65%, preferably 10% to 60%, and most preferably 15% to 25%. The discharging may be performed in a room temperature range, for example, 20°C to 30°C.

Hereinafter, the present invention will be described in detail, according to specific examples. However, the following examples are merely presented to exemplify the present invention, and the scope of the present invention is not limited thereto. It will be apparent to those skilled in the art that various modifications and alterations are possible within the scope and technical spirit of the present invention, and such modifications and alterations fall within the scope of claims included herein.

### Examples

### Example 1

### (Preparation of Non-aqueous Electrolyte Solution)

A non-aqueous solvent was prepared by dissolving LiPF₆ in an organic solvent (ethylene carbonate (EC) :ethyl methyl carbonate (EMC) = 30:70 volume ratio) such that a concentration of the LiPF₆ was 1 M, and a non-aqueous electrolyte solution composition was prepared by adding 0.5 g of vinylene carbonate and 0.2 g of the azo-based initiator compound of Formula 1-1 to 99.3 g of the non-aqueous solvent.

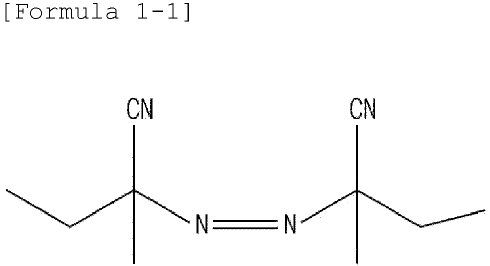

### (Lithium Secondary Battery Preparation)

A positive electrode active material (LiNi_{0.8}Co_{0.1}Mn_{0.1}O₂), a conductive agent (Super-P), a binder(polyvinylidene fluoride) were added in a weight ratio of 97.74:0.70:1.56 to N-methyl-2-pyrrolidone (NMP), as a solvent, to prepare a positive electrode slurry. One surface of a 15µm thick positive electrode collector (Al thin film) was coated with the positive electrode slurry, dried, and roll-pressed to prepare a positive electrode.

A negative electrode active material (graphite), a conductive agent (Super-P), and a binder (SBR-CMC) were added to N-methyl-2-pyrrolidone (NMP), as a solvent, in a weight ratio of 96.15:0.50:3.35 to prepare a negative electrode slurry. One surface of a 15µm thick negative electrode collector (Cu thin film) was coated with the negative electrode slurry, dried, and roll-pressed to prepare a negative electrode.

After disposing a polyolefin-based porous separator coated with Al₂O₃ inorganic particles between the above-prepared positive electrode and negative electrode in a dry room, a lithium secondary battery was prepared by injecting the above-prepared non-aqueous electrolyte solution composition.

The prepared lithium secondary battery was charged to an SOC of 40% at 60°C and aged at 60°C for 24 hours. Thereafter, a lithium secondary battery was prepared by discharging it to an SOC of 20% at room temperature.

### Example 2

A lithium secondary battery was prepared in the same manner as in Example 1 except that a non-aqueous electrolyte solution was prepared by adding 0.5 g of vinylene carbonate and 0.2 g of the azo-based initiator compound of Formula 1-2 to 99.3 g of the non-aqueous solvent prepared in Example 1.

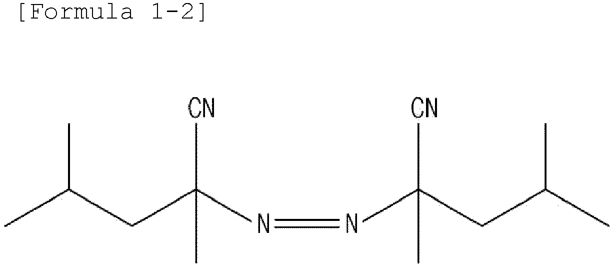

### Comparative Example 1

A lithium secondary battery was prepared in the same manner as in Example 1 except that a non-aqueous electrolyte solution was prepared by adding 0.5 g of vinylene carbonate to 99.5 g of the non-aqueous solvent prepared in Example 1.

### Comparative Example 2

A lithium secondary battery was prepared in the same manner as in Example 1 except that a non-aqueous electrolyte solution was prepared by adding 0.5 g of vinylene carbonate and 0.2 g of azobisisobutyronitrile (ABIN) to 99.3 g of the non-aqueous solvent prepared in Example 1.

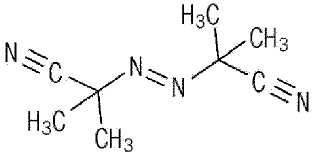

### Comparative Example 3

A lithium secondary battery was prepared in the same manner as in Example 1 except that a non-aqueous electrolyte solution was prepared by adding 5.5 g of vinylene carbonate and 0.2 g of the azo-based initiator compound of Formula 1-1to 94.3 g of the non-aqueous solvent prepared in Example 1.

### Comparative Example 4

A lithium secondary battery was prepared in the same manner as in Example 1 except that a non-aqueous electrolyte solution was prepared by adding 0.005 g of vinylene carbonate and 0.2 g of the azo-based initiator compound of Formula 1-1to 99.795 g of the non-aqueous solvent prepared in Example 1.

### Experimental Example- High-temperature Storage Characteristics Evaluation

High-temperature storage characteristics were evaluated for each of the lithium secondary batteries prepared in Examples 1 and 2 and Comparative Examples 1 to 4.

Specifically, after fully charging each of the lithium secondary batteries prepared in Examples 1 and 2 and Comparative Examples 1 to 4 to 4.2 V, each lithium secondary battery was stored at 60°C for 8 weeks.

Before the storage, capacity and resistance of the secondary battery fully charged at room temperature were measured to set them as initial capacity and resistance of the secondary battery, respectively.

After 8 weeks, capacity and resistance of the stored secondary battery were measured to calculate capacity and resistance that had been decreased and increased during a storage period of 8 weeks, respectively. Percent ratios of the decreased capacity to the initial capacity and the increased resistance to the initial resistance of the secondary battery were calculated to derive a capacity retention and a resistance increase rate after 8 weeks, respectively. The results thereof are presented in Table 1 below.

**[Table 1]**

| | Capacity retention (%) | Resistance increase rate (%) |
|---|---|---|
| Example 1 | 96.11 | 1.5 |
| Example 2 | 96.26 | 1.8 |
| Comparative Example 1 | 95.61 | 11.11 |
| Comparative Example 2 | 95.75 | 8.5 |
| Comparative Example 3 | 92.75 | 10.25 |
| Comparative Example 4 | <80.0 | >20.0 |

As illustrated in Table 1, it was confirmed that the lithium secondary batteries of Examples 1 and 2 had stable performance at high temperature because their capacity retentions after 8 weeks were higher than those of the secondary batteries of Comparative Examples 1 to 4. Particularly, it was confirmed that the lithium secondary batteries of Examples 1 and 2 had significantly lower resistance increase rates after 8 weeks than the secondary batteries of Comparative Examples 1 to 4. With respect to the lithium secondary battery of Comparative Example 1, it was considered that, since there was no azo-based initiator, the ring-opening reaction occurred preferentially in vinylene carbonate, and thus, the cyclic carbonate polymer film formed by the polymerization of the carbon-carbon double bonds was not properly formed.

Also, with respect to the lithium secondary battery of Comparative Example 2, it was considered that a cyclic carbonate polymer film was not properly formed because a large amount of azobisisobutyronitrile (ABIN) was volatilized before the cyclic carbonate polymer film was formed.

With respect to the lithium secondary battery of Comparative Example 3, an organic SEI film was formed because an amount of the cyclic carbonate was excessively large. Since the film having an excessively large amount of the organic component was easily collapsed due to poor high-temperature stability, it was considered that a side reaction occurred at an interface between the electrode and the electrolyte to reduce capacity during cycles. Furthermore, it was considered that CO₂ gas, which was generated during such a film collapse process, caused an increase in resistance by swelling the battery.

With respect to the lithium secondary battery of Comparative Example 4, it was considered that it had an inferior effect because a sufficient SEI film was not formed due to an excessively small amount of the cyclic carbonate.

## Claims

1. A non-aqueous electrolyte solution composition which is composed of an organic solvent, a lithium salt, a cyclic carbonate-based additive containing a carbon-carbon double bond, and an azo-based initiator,
wherein the azo-based initiator is represented by Formula 1, and
the cyclic carbonate-based additive is included in an amount of 0.01 wt% to 5 wt% based on the total non-aqueous electrolyte solution composition. 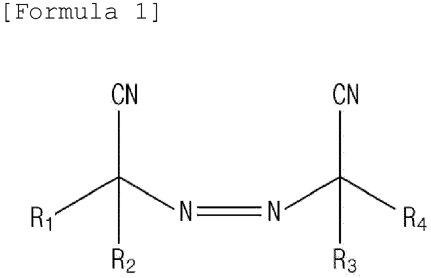
wherein, in Formula 1, R₁ to R₄ are each independently selected from an alkyl group having 1 to 5 carbon atoms or an alkoxy group having 1 to 5 carbon atoms, and a case where all of R₁ to R₄ are methyl groups is excluded.

2. The non-aqueous electrolyte solution composition of claim 1, wherein the organic solvent comprises at least one organic solvent selected from the group consisting of ethylene carbonate, diethyl carbonate, and ethylmethyl carbonate.

3. The non-aqueous electrolyte solution composition of claim 1, wherein the lithium salt comprises at least one selected from the group consisting of LiPF₆, lithium bis(fluorosulfonyl)imide, and lithium bis(trifluoromethanesulfonyl)imide.

4. The non-aqueous electrolyte solution composition of claim 1, wherein the lithium salt is included in a concentration of 0.1 M to 4.0 M.

5. The non-aqueous electrolyte solution composition of claim 1, wherein the cyclic carbonate-based additive containing a carbon-carbon double bond is at least one selected from the group consisting of vinylene carbonate and vinyl ethylene carbonate.

6. The non-aqueous electrolyte solution composition of claim 1, wherein the azo-based initiator is a compound represented by Formula 1-1 or Formula 1-2.

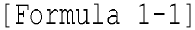

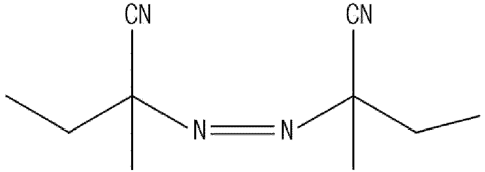

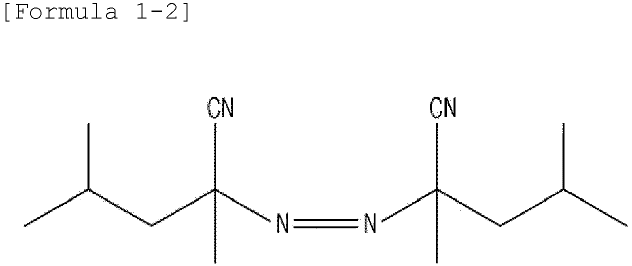

7. The non-aqueous electrolyte solution composition of claim 1, wherein the azo-based initiator is included in an amount of 0.001 wt% to 0.3 wt% based on the total non-aqueous electrolyte solution composition.

8. A lithium secondary battery which is prepared by injecting the non-aqueous electrolyte solution composition of any one of claims 1 to 7 into a case accommodating an electrode assembly that comprises a positive electrode; a negative electrode; and a separator disposed between the positive electrode and the negative electrode.

9. A method of preparing a lithium secondary battery, the method comprising steps of:
preparing a lithium secondary battery into which a non-aqueous electrolyte solution composition, which includes an organic solvent, a lithium salt, a cyclic carbonate-based additive containing a carbon-carbon double bond, and an azo-based initiator, is injected; and
activating the lithium secondary battery to form a cyclic carbonate polymer film on a surface of an electrode,
wherein the azo-based initiator is represented by Formula 1, and
the cyclic carbonate-based additive containing a carbon-carbon double bond is included in an amount of 0.01 wt% to 5 wt% based on the total non-aqueous electrolyte solution composition. 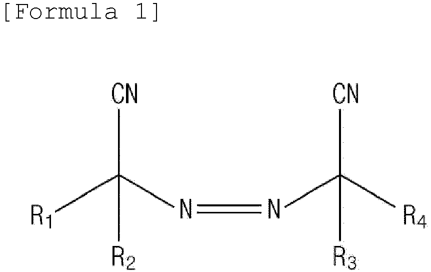
wherein, in Formula 1, R₁ to R₄ are each independently selected from an alkyl group having 1 to 5 carbon atoms or an alkoxy group having 1 to 5 carbon atoms, and a case where all of R₁ to R₄ are methyl groups is excluded.

10. The method of claim 9, wherein the organic solvent comprises at least one organic solvent selected from the group consisting of ethylene carbonate, diethyl carbonate, and ethylmethyl carbonate.

11. The method of claim 9, wherein the cyclic carbonate-based additive containing a carbon-carbon double bond is at least one selected from the group consisting of vinylene carbonate and vinyl ethylene carbonate.

12. The method of claim 9, wherein the azo-based initiator is a compound represented by Formula 1-1 or Formula 1-2.

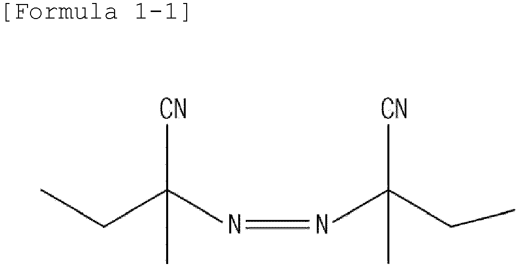

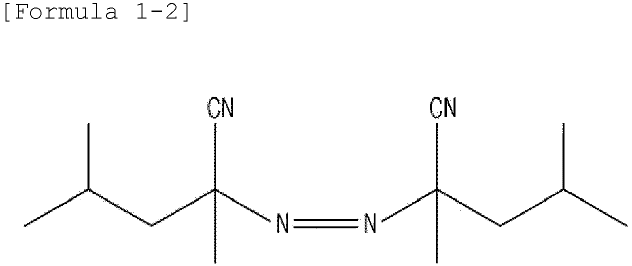

13. The method of claim 9, wherein the azo-based initiator is included in an amount of 0.001 wt% to 0.3 wt% based on the total non-aqueous electrolyte solution composition.

14. The method of claim 9, wherein the activating comprises an initial charging process, an aging process, and a discharging process.

15. The method of claim 14, wherein the aging process is performed at 30°C to 80°C.
